# EUROPEAN PATENT APPLICATION

(11) **EP 4 207 425 A1**
(43) Date of publication of application: **05.07.2023**
(21) Application number: 20955737.0
(22) Date of filing: 30.09.2020
(51) Int. Cl.: H01M 10/058

(54) **LIQUID BATTERY AND ELECTRONIC DEVICE HAVING SAME**

(71) Applicant: Ningde Amperex Technology Ltd., Ningde City, Fujian 352100 (CN)
(72) Inventor: YAN, Kun, Ningde, Fujian 352100 (CN); DING, Yu, Ningde, Fujian 352100 (CN); SHENG, Yangping, Ningde, Fujian 352100 (CN)
(74) Representative: Icosa
(86) International application number: PCT/CN2020/119521
(87) International publication number: WO 2022/067712

(57) **Abstract**

A liquid state battery includes a housing, a separator, a first slurry, a first current collector, a second slurry, a second current collector, a first tab, and a second tab having a different polarity than the first tab. The housing encloses a receiving space. The separator is disposed in the receiving space and divides the receiving space into a first chamber and a second chamber. The first slurry and the first current collector are received in the first chamber. The second slurry and the second current collector are received in the second chamber. The first tab is electrically connected to the first current collector and extend outside the housing. The second tab is electrically connected to the second current collector and extend outside the housing. This application further provides an electronic device containing such liquid state battery.

## Description

### TECHNICAL FIELD

This application relates to the field of electrochemistry, and specifically, to a liquid state battery and an electronic device containing same.

### BACKGROUND

Lithium batteries are widely used in electronic devices for their advantages such as high energy density, long cycle life, and environmental friendliness.

With the development of flexible electronics (such as foldable devices and wearable electronic devices), to fit shapes of flexible electronics and respond to changes in the shape and/or volume of flexible electronics during use, batteries need to be flexible to some extent. However, electrode assemblies in currently available batteries (an electrode assembly is formed via winding or lamination of a first electrode plate, a separator, and a second electrode plate) are solid state ones. The application of such batteries to flexible electronics usually compromise energy density (for instance, such a battery is made less thick), in order to ensure that the battery is flexible enough to fit flexible electronics.

### SUMMARY

In view of this, it is necessary to provide a liquid state battery so as to resolve the foregoing problems.

A liquid state battery includes a housing, where the housing encloses a receiving space, and the liquid state battery further includes:
a separator, disposed in the receiving space and configured to divide the receiving space into a first chamber and a second chamber;
a first slurry and a first current collector, received in the first chamber;
a second slurry and a second current collector, received in the second chamber;
a first tab, electrically connected to the first current collector and extend outside the housing; and
a second tab having a different polarity than the first tab, electrically connected to the second current collector and extend outside the housing.

Optionally, two ends of the housing are sealed to form a first sealing edge and a second sealing edge, respectively. Both the first tab and the second tab extend out from inside the first sealing edge or from inside the second sealing edge. The separator is disposed between the first tab and the second tab.

Optionally, two ends of the housing are sealed to form a first sealing edge and a second sealing edge, respectively. The first tab extends out from inside the first sealing edge, and the second tab extends out from inside the second sealing edge. The separator is disposed between the first tab and the second tab.

Optionally, the separator includes a first end and a second end away from the first end. The first end is disposed inside the first sealing edge, and the second end is disposed inside the second sealing edge.

Optionally, the housing includes a first housing body and a second housing body. The first housing body is connected to the second housing body to form the receiving space. The separator is disposed between the first housing body and the second housing body. The first housing body and the separator together form the first chamber, and the second housing body and the separator together form the second chamber.

Optionally, the first current collector is connected to a surface of first housing body facing the separator, and the second current collector is connected to a surface of the second housing body facing the separator.

Optionally, the first tab is welded to the first current collector, and the second tab is welded to the second current collector.

Optionally, the first slurry is in a liquid or fluidized state, and the second slurry is in a liquid or fluidized state.

Optionally, the liquid state battery further includes an insulator, where the insulator is sealed inside the first sealing edge, so that a section of the first tab inside the first sealing edge is electrically insulated from the first sealing edge, and a section of the second tab inside the first sealing edge is electrically insulated from the first sealing edge.

An electronic device is disclosed, including the liquid state battery according to any one of the foregoing.

In this application, the first slurry, the first current collector, the separator, the second slurry, and the second current collector together constitute a liquid state electrode assembly, which is used to replace a solid state electrode assembly in a conventional battery (the solid electrode assembly is formed by winding or lamination of a first electrode plate, a separator, and a second electrode plate), so that the liquid state battery has not only energy density equal to or higher than that of the conventional battery but also full flexibility in three dimensions.

### BRIEF DESCRIPTION OF DRAWINGS

FIG. 1 is a schematic diagram of a battery according to an embodiment of this application.
FIG. 2 is a schematic diagram of a partial cross-section, from a different perspective, of a first tab, a second tab, and an insulator shown in FIG. 1.
FIG. 3 is a schematic diagram of a partial structure of the battery shown in FIG. 1.
FIG. 4 is a schematic diagram of the insulator, a first current collector, and the first tab shown in FIG. 1.
FIG. 5 is a schematic diagram, from a different perspective, of the insulator, the first current collector, and the first tab shown in FIG. 4.
FIG. 6 is a schematic diagram of a battery according to another embodiment of this application.
FIG. 7 is a schematic diagram of modules of an electronic device according to an embodiment of this application.

### Reference signs of main components

| | |
|---|---|
| Liquid state battery | 10 |
| Housing | 11 |
| Receiving space | 111 |
| First chamber | 1111 |
| Second chamber | 1112 |
| First sealing edge | 112 |
| Second sealing edge | 113 |
| First housing body | 114 |
| Second housing body | 115 |
| Separator | 12 |
| First end | 121 |
| Second end | 122 |
| First slurry | 13 |
| First current collector | 14 |
| Second slurry | 15 |
| Second current collector | 16 |
| First tab | 17 |
| Second tab | 18 |
| Insulator | 19 |
| Electronic device | 100 |

This application will be further described with reference to the accompanying drawings in the following specific embodiments.

### DESCRIPTION OF EMBODIMENTS

The following clearly and comprehensively describes the technical solutions in some embodiments of this application with reference to the accompanying drawings in some embodiments of this application. Apparently, the described embodiments are some rather than all embodiments of this application.

Unless otherwise defined, all technical and scientific terms used herein shall have the same meanings as commonly understood by those skilled in the art to which this application belongs. The terms used herein in the specification of this application are only for description of specific embodiments, and are not intended to limit this application.

The following describes in detail some embodiments of this application with reference to the accompanying drawings. In the absence of conflicts, the following embodiments and features in the embodiments may be combined.

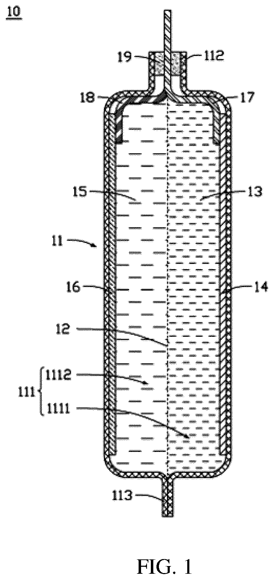

As shown in FIG. 1, an embodiment of this application provides a liquid state battery 10. The liquid state battery 10 includes a housing 11, a separator 12, a first slurry 13, a first current collector 14, a second slurry 15, a second current collector 16, a first tab 17, and a second tab 18 having a different polarity than the first tab 17. The housing 11 encloses a receiving space 111. The separator 12 is disposed in the receiving space 111 and divides the receiving space 111 into a first chamber 1111 and a second chamber 1112. The first slurry 13 and the first current collector 14 are received in the first chamber 1111. The second slurry 15 and the second current collector 16 are received in the second chamber 1112. The first tab 17 is electrically connected to the first current collector 14 and extend outside the housing 11. The second tab 18 is electrically connected to the second current collector 16 and extend outside the housing 11.

In this embodiment, the first slurry 13 is in a liquid or fluidized state, and the second slurry 15 is in a liquid or fluidized state. The housing 11 is a flexible housing.

In this application, the first slurry 13, the first current collector 14, the separator 12, the second slurry 15, and the second current collector 16 together constitute a liquid state electrode assembly, which is used to replace a solid state electrode assembly in a conventional battery (the solid state electrode assembly is formed by winding or lamination of a first electrode plate, a separator, and a second electrode plate), so that the liquid state battery 10 has not only energy density equal to or higher than that of the conventional battery and but also full flexibility in three dimensions. To be specific, the full flexibility in three dimensions means the liquid state battery 10 can be bent 0-180 degrees in all directions.

Referring to FIG. 1, two ends of the housing 11 are sealed to form a first sealing edge 112 and a second sealing edge 113. Specifically, both the first tab 17 and the second tab 18 extend from inside the first sealing edge 112. The separator 12 is disposed between the first tab 17 and the second tab 18, so that the first tab 17 is electrically insulated from the second tab 18.

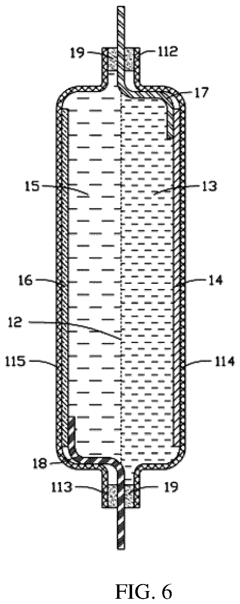

In other embodiments, both the first tab 17 and the second tab 18 extend out from inside the second sealing edge 113; or the first tab 17 extends out from inside the first sealing edge 112, and the second tab 18 extends out from inside the second sealing edge 113 (referring to FIG. 6).

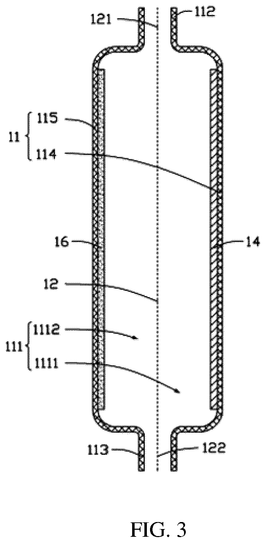

Referring to FIG. 3, the separator 12 includes the first end 121 and the second end 122 away from the first end 121. The first end 121 is disposed inside the first sealing edge 112, and the second end 122 is disposed inside the second sealing edge 113.

Referring to FIG. 3, the housing 11 includes a first housing body 114 and a second housing body 115. The first housing body 114 is connected to the second housing body 115 to form the receiving space 111. The separator 12 is disposed between the first housing body 114 and the second housing body 115. As such, the first housing body 114 and the separator 12 together form the first chamber 1111, and the second housing body 115 and the separator 12 together form the second chamber 1112.

Refer to FIG. 3. The first current collector 14 is connected to a surface of the first housing body 114 facing the separator 12, and the second current collector 16 is connected to a surface of the second housing body 115 facing the separator 12.

Refer to FIG. 1. The first tab 17 is welded to the first current collector 14, and the second tab 18 is welded to the second current collector 16.

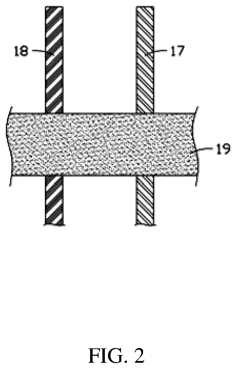

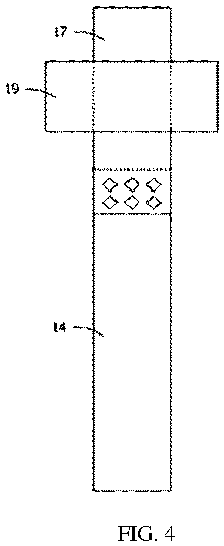

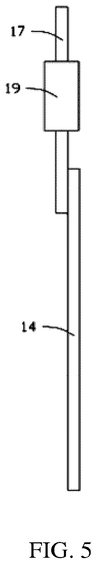

Refer to FIG. 1, FIG. 2, FIG. 4, and FIG. 5. The liquid state battery 10 further includes an insulator 19. The insulator 19 is sealed inside the first sealing edge 112, so that a section of the first tab 17 inside the first sealing edge 112 is electrically insulated from the first sealing edge 112, and a section of the second tab 18 inside the first sealing edge 112 is electrically insulated from the first sealing edge 112.

The liquid state battery 10 of this application is described in detail below with examples.

### Example 1

Refer to FIG 1. A liquid state battery 10 includes a housing 11, a separator 12, a first slurry 13, a first current collector 14, a second slurry 15, a second current collector 16, a first tab 17, a second tab 18 having a different polarity than the first tab 17, and an insulator 19. In Example 1, the housing 11 is a flexible housing.

Referring to FIG. 1, the housing 11 includes a first housing body 114 and a second housing body 115. The first housing body 114 is connected to the second housing body 115 to form a receiving space 111. Specifically, junctions between the first housing body 114 and the second housing body 115 are sealed to form a first sealing edge 112 and a second sealing edge 113, respectively, in order to seal the receiving space 111. The first sealing edge 112 and the second sealing edge 113 face opposite directions.

In other embodiments, the first housing body 114 and the second housing body 115 are integrally formed. As such, the two ends of the housing 11 can simply be sealed to form the first sealing edge 112 and the second sealing edge 113, respectively.

The separator 12 is disposed between the first housing body 114 and the second housing body 115 and divides the receiving space 111 into a first chamber 1111 and a second chamber 1112. Specifically, the first slurry 13 is received in the first chamber 1111, and the second slurry 15 is received in the second chamber 1112. As such, while the first current collector 14 is electrically insulated from the second current collector 16 by the separator 12, ion conduction between the first slurry 13 and the second slurry 15 is guaranteed.

In particular, the separator 12 includes a first end 121 and a second end 122 away from the first end 121. The first end 121 is disposed inside the first sealing edge 112, and the second end 122 is disposed inside the second sealing edge 113. As such, the first housing body 114 and the separator 12 together form the first chamber 1111, and the second housing body 115 and the separator 12 together form the second chamber 1112.

In Example 1, the first slurry 13 is in a liquid or fluidized state, and the second slurry 15 is in a liquid or fluidized state.

The first slurry 13 is a first slurry electrode of the liquid state battery 10. The first slurry 13 is prepared in a process including: adding a gelable polymer additive to an electrolyte and then adding an active substance of a first polarity and a long-range conductive agent to make a semi-solid slurry; and injecting the semi-solid slurry into or applying the semi-solid slurry on the inside of the first chamber 1111 that contains the first current collector 14.

The second slurry 15 is a second slurry electrode of the liquid state battery 10. The second slurry 15 is prepared in a process including: adding a gelable polymer additive to an electrolyte and then adding an active substance of a second polarity and a long-range conductive agent to make a semi-solid slurry; and injecting the semi-solid slurry into or applying the semi-solid slurry on the inside of the second chamber 1112 that contains the second current collector 16. The polarity of the first slurry electrode is opposite to the polarity of the second slurry electrode.

The first current collector 14 is connected to a surface of the first housing body 114 facing the separator 12, and the second current collector 16 is connected to a surface of the second housing body 115 facing the separator 12. Specifically, the first current collector 14 is electrically insulated from the first housing body 114, and the second current collector 16 is electrically insulated from the second housing body 115. In Example 1, the first current collector 14 and the second current collector 16 are both flexible current collectors.

In an embodiment, the first current collector 14 may be bonded to the first housing body 114 by adhesive, and the second current collector 16 may be bonded to the second housing body 115 by adhesive.

The first tab 17 is electrically connected to the first current collector 14 and extends out from inside the first sealing edge 112 to outside the housing 11. The second tab 18 is electrically connected to the second current collector 16 and extends out from inside the first sealing edge 112 to outside the housing 11. Specifically, the separator 12 is disposed between the first tab 17 and the second tab 18, so that the first tab 17 is electrically insulated from the second tab 18.

In Example 1, the first tab 17 and the first current collector 14 are laser-welded together, and the second tab 18 and the second current collector 16 are laser-welded together.

The insulator 19 is sealed inside the first sealing edge 112, so that a section of the first tab 17 inside the first sealing edge 112 is electrically insulated from the first sealing edge 112, and a section of the second tab 18 inside the first sealing edge 112 is electrically insulated from the first sealing edge 112.

In Example 1, the liquid state battery 10 includes two such insulators 19. One insulator 19 wraps the section of the first tab 17 inside the first sealing edge 112, and the other insulator 19 wraps the section of the second tab 18 inside the first sealing edge 112.

### Example 2

As shown in FIG. 6, Example 2 is different from Example 1 in positions of the second tab 18 and the insulator 19 in Example 2.

As shown in FIG. 6, in Example 2, the second tab 18 extends out from inside the second sealing edge 113. The other insulator 19 wraps a section of the second tab 18 inside the second sealing edge 113.

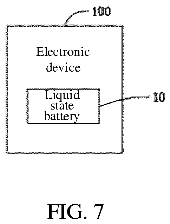

As shown in FIG. 7, this application further provides an electronic device 100. The electronic device 100 contains the liquid state battery 10 described above.

Specifically, the electronic device 100 may be a mobile electronic device, an energy storage device, an electric vehicle, a hybrid electric vehicle, or the like. The mobile electronic device may be a foldable device, a wearable electronic device, or the like.

The foregoing examples are merely intended to describe the technical solutions of this application, but not intended to constitute any limitation. Although this application has been described in detail with reference to preferred examples, persons of ordinary skill in the art should understand that modifications or equivalent replacements can be made to the technical solutions of this application, without departing from the spirit and essence of the technical solutions of this application.

## Claims

1. A liquid state battery, comprising a housing; wherein the housing encloses a receiving space, and the liquid state battery further comprises:
a separator, disposed in the receiving space and configured to divide the receiving space into a first chamber and a second chamber;
a first slurry and a first current collector, received in the first chamber;
a second slurry and a second current collector, received in the second chamber;
a first tab, electrically connected to the first current collector and extend outside the housing; and
a second tab having a different polarity than the first tab, electrically connected to the second current collector and extends outside the housing.

2. The liquid state battery according to claim 1, wherein two ends of the housing are sealed to form a first sealing edge and a second sealing edge, respectively; both the first tab and the second tab extend out from inside the first sealing edge or from inside the second sealing edge; and the separator is disposed between the first tab and the second tab.

3. The liquid state battery according to claim 1, wherein two ends of the housing are sealed to form a first sealing edge and a second sealing edge, respectively; the first tab extends out from inside the first sealing edge, and the second tab extends out from inside the second sealing edge; and the separator is disposed between the first tab and the second tab.

4. The liquid state battery according to claim 2 or 3, wherein the separator comprises a first end and a second end away from the first end; the first end is disposed inside the first sealing edge; and the second end is disposed inside the second sealing edge.

5. The liquid state battery according to claim 1, wherein the housing comprises a first housing body and a second housing body; the first housing body is connected to the second housing body so as to form the receiving space; the separator is disposed between the first housing body and the second housing body; the first housing body and the separator form the first chamber; and the second housing body and the separator form the second chamber.

6. The liquid state battery according to claim 1, wherein the first current collector is connected to a surface of the first housing body facing the separator, and the second current collector is connected to a surface of the second housing body facing the separator.

7. The liquid state battery according to claim 1, wherein the first tab is welded to the first current collector, and the second tab is welded to the second current collector.

8. The liquid state battery according to claim 1, wherein the first slurry is in a liquid or fluidized state, and the second slurry is in a liquid or fluidized state.

9. The liquid state battery according to claim 2, wherein the liquid state battery further comprises an insulator, wherein the insulator is sealed inside the first sealing edge, so that a section of the first tab inside the first sealing edge is electrically insulated from the first sealing edge, and a section of the second tab inside the first sealing edge is electrically insulated from the first sealing edge.

10. An electronic device, wherein the electronic device comprises the liquid state battery according to any one of claims 1 to 9.
